# EUROPÄISCHE PATENTANMELDUNG

(11) **EP 3 936 382 A1**
(43) Veröffentlichungstag der Anmeldung: **12.01.2022**
(21) Anmeldenummer: 21185181.1
(22) Anmeldetag: 12.07.2021
(51) Int. Cl.: B60P 3/36, B60N 3/00, B60P 7/08

(54) **FREIZEITFAHRZEUG MIT TISCH**

(30) Priorität: 10.07.2020 DE 102020118342
(71) Anmelder: Niesmann+Bischoff GmbH, 56751 Polch (DE)
(72) Erfinder: Schmitz, Marcel, 77933 Lahr (DE); Weiber, Andres, 56220 Bassenheim (DE)
(74) Vertreter: Waller, Stefan

(57) **Zusammenfassung**

Bei einem Freizeitfahrzeug mit einem Wohnbereich, in dem ein verschiebbarer Tisch (1) angeordnet ist, der in einem in dem Boden (8) eingelassenen Schienensystem zwischen mindestens zwei Positionen über eine Strecke verschiebbar ist, ist ein Führungselement (3) des Tisches in dem Schienensystem über Rollen (4) geführt.

## Beschreibung

Die Erfindung betrifft ein Freizeitfahrzeug mit einem Tisch, insbesondere einem Tisch als Teil einer Sitzgruppe.

Unter einem Freizeitfahrzeug oder Campingfahrzeug wird vorliegend ein Wohnmobil oder ein Wohnwagen verstanden, also vorzugsweise diejenigen Fahrzeuge oder Anhänger, bei denen ein Nutzer eine Möglichkeit zum Schlafen oder Wohnen in diesem Fahrzeug hat. Eine Motorisierung der Fahrzeuge ist nicht erforderlich. Eine andere Bezeichnung für ein Wohnmobil ist zum Beispiel ein Reisemobil oder Freizeitmobil. Ein Wohnwagen kann zum Beispiel alternativ als Caravan oder Campinganhänger bezeichnet werden. Campingfahrzeuge werden alternativ auch Freizeitfahrzeuge genannt.

In solchen Freizeitfahrzeugen ist oftmals ein Tisch angeordnet mit einer um diesen herum angeordneten flexiblen Sitzgruppe. Diese kann beispielsweise so ausgeführt sein, dass von zwei Sitzbänken eine in Fahrtrichtung und eine gegen die Fahrtrichtung orientiert ist, wobei der Tisch dazwischen angeordnet ist. Bei dieser Anordnung kann dann beispielsweise auf der anderen Fahrzeugseite auch noch eine Sitzgelegenheit vorhanden sein. Daneben sind aber auch Anordnungen mit zwei Sitzbänken längst der Fahrtrichtung an beiden Seiten des Fahrzeugs denkbar. Bei allen diesen Anordnungen blockiert der Tisch in seiner Benutzungsstellung den Durchgang in Längsrichtung durch das Fahrzeug mehr oder weniger. Durch den Einsatz beispielsweise einer schwenkbaren Bank, die quer zur Fahrtrichtung während der Fahrt gedreht wird und ansonsten längs bei Wohnbetrieb, und der Notwendigkeit eines Ganges als Fluchtweg kann der Wohntisch ebenfalls nicht wie üblich an einer festen Position stehen. Der Tisch muss während der Wohn- und der Fahrsituation an unterschiedlichen Orten befestigt sein.

Ein flexibles Tischsystem kann mittels Schienensystem, eines losen Tisches, letzteres ist in Wohnwagen üblich, oder mit Hilfe einer Schwenkvorrichtung zur Verfügung gestellt werden.

Um Platz und Gewicht zu sparen und für die crashsichere Befestigung empfiehlt sich ein Schienensystem. Ein loser Tisch benötigt einen großen Fußteller; eine Schwenkvorrichtung muss massiv ausgeführt werden, um die auftretenden Biegemomente aufnehmen zu können.

Aktuelle Schienensysteme mit Hilfe von Flachführungen und Gleitlagern erzeugen eine sehr große Reibung bei großem Hebelarm durch einen Kraftangriffspunkt in Höhe der Tischkante mit einem wirksamen Hebelarm über die Höhe des Tisches bzw. die Länge des Tischfußes. Dadurch sind diese rutschhemmend und somit quasi selbsthemmend befestigt.

Nachteilig an diesem Stand der Technik ist, dass diese sich jedoch nur schlecht umpositionieren lassen. Diese sind sehr oft auch nur schwergängig zu verschieben und neigen dazu, aufgrund des ungünstigen Hebelarms sich zu verkanten. Im Falle von offenen Schienen besteht auch die Gefahr, dass diese sehr schnell verdrecken bzw. verschmutzen. Eine korrekte Funktion ist dann nicht mehr gegeben.

Außerdem muss der Tisch auch während der Fahrt so gelagert sein, dass er bei Kurvenfahrt oder Crash sicher arretiert ist. Bei den bekannten Ausführungsform ergibt sich jedoch oftmals nur eine reduzierte Sicherheit. Beispielsweise im Fall von Kurvenfahrten können sich die Tische aufgrund der teilweise hohen Fliehkräfte dennoch in ihren Schienen verschieben. Bei losen Tischen besteht in noch größerem Maße eine fehlende Sicherheit bei einem Crash bzw. muss eventuell eine umständliche Arretierung im Bedarfsfall vorgesehen werden.

Herkömmliche Schienensysteme sind im Boden zwar eingelassen, jedoch aufgrund des erforderlichen offenen Schlitzes deutlich sichtbar.

Es ist daher Aufgabe der vorliegenden Erfindung, ein Freizeitfahrzeug mit einem Wohnbereich, in dem ein verschiebbarer Tisch angeordnet ist, zur Verfügung zu stellen, bei dem die zuvor genannten Nachteile vermieden werden und bei dem eine leichte Positionsverschiebung des Tisches möglich ist bei gleichzeitiger guter Arretierung und Sicherung in den verschiedenen Positionen.

Diese Aufgabe wird durch ein Freizeitfahrzeug mit dem Merkmal des unabhängigen Patentanspruchs 1 gelöst. Vorteilhafte Weiterbildungen der Erfindung sind in den Unteransprüchen angegeben.

Die Aufgabe wird dadurch gelöst, indem bei einem Freizeitfahrzeug mit einem Wohnbereich, in dem ein verschiebbarer Tisch angeordnet ist, der in einem in dem Boden eingelassenen Schienensystem zwischen mindestens zwei Positionen über eine Strecke verschiebbar ist, ein Führungselement des Tisches in dem Schienensystem über Rollen geführt ist.

Dadurch ergibt sich eine leichte Bewegbarkeit und Verschiebbarkeit des Tisches in den Schienen und es kommt auch nicht zu einem Verkanten. Auch wenn der Tisch an der Tischkante mit der Hand ergriffen und bewegt wird, kommt es trotz des großen Hebels nicht zu einer Schwergängigkeit, da die Rollen nur eine geringe Reibung aufweisen.

Vorteilhaft kann der Tisch in einer Position durch ein Bremselement, das durch Reibung eine Haftkraft zwischen dem beweglichen Führungselement und einem Boden des Freizeitfahrzeugs und oder dem Schienensystem erzeugt, in einer Position gehalten werden.

Das Bremselement kann ein Bremsfuß sein, der im Tischbein angeordnet gegen die Bodenfläche gedrückt wird.

Insbesondere kann das Bremselement, beispielsweise ein Bremsfuß, versteckt in dem Tischbein angeordnet sein, sodass dieses von außen nicht zu sehen ist, und direkt auf den Fußboden drücken in der arretierten Position.

Der Bremsfuß kann eine gummierte Fläche aufweisen.

In einer vorteilhaften Ausgestaltung kann der Bremsfuß durch eine Betätigungsvorrichtung, insbesondere einen Seilzug oder eine Betätigungsstange über einen Hebelantrieb, angehoben werden und ansonsten durch eine Kraft vorgespannt sein, insbesondere die Kraft einer Feder.

Der Tisch ist dabei stets durch die Vorspannung abgebremst bzw. arretiert, solange die Betätigungsvorrichtung nicht benutzt wird.

Vorteilhaft ist ein Handgriff für die Betätigungsvorrichtung an einer Tischkante an der Unterseite angeordnet und ermöglicht in betätigter Stellung, insbesondere gegen eine Tischplatte gedrückt, ein Verschieben des Tisches über den Handgriff.

Dies ermöglicht eine Einhand-Bedienung, indem mit einer Hand die Betätigungsvorrichtung ergriffen wird und durch diese die Bremsung gelöst wird, wobei zugleich über diesen Griff und/oder die Tischkante auch ein Verschieben des Tisches möglich ist.

Die Schienen können senkrecht betrachtet gegenüber einer Durchführung des Führungselements des Tisches durch den Boden seitlich versetzt sein.

Dadurch kann verhindert werden, dass Schmutz, der von oben durch die Durchführung nach unten fällt in die eigentlichen Schienen gelangen kann.

Vorteilhaft ist das Führungselement in zwei seitlich zueinander beanstandeten Schienen geführt, weist insbesondere auch zwei zueinander beabstandete Durchführungen durch den Boden auf.

Vorteilhaft ist das Führungselement durch Schlitze durch den Boden zu den Schienen geführt, die insbesondere durch Abstreifbürsten verschlossen sein können.

Dies ergibt einen optisch sehr ansprechenden Eindruck. Beispielsweise können zwischen den beiden Durchführungen Einlegelement angeordnet werden, so dass die Bodenfläche möglichst geschlossen wirkt.

Weitere Vorteile und Einzelheiten der Erfindung werden anhand der in den schematischen Figuren dargestellten Ausführungsbeispiele näher erläutert. Hierbei zeigt
- Fig. 1: in Queransicht einen verschiebbaren Tisch,
- Fig. 2: in Perspektivansicht den Fußbereich eines Tisches in einer zweiten Ausführungsform und
- Fig. 3: in perspektivische Ansicht den Fußboden mit zwei Positionen des Tischfußes.

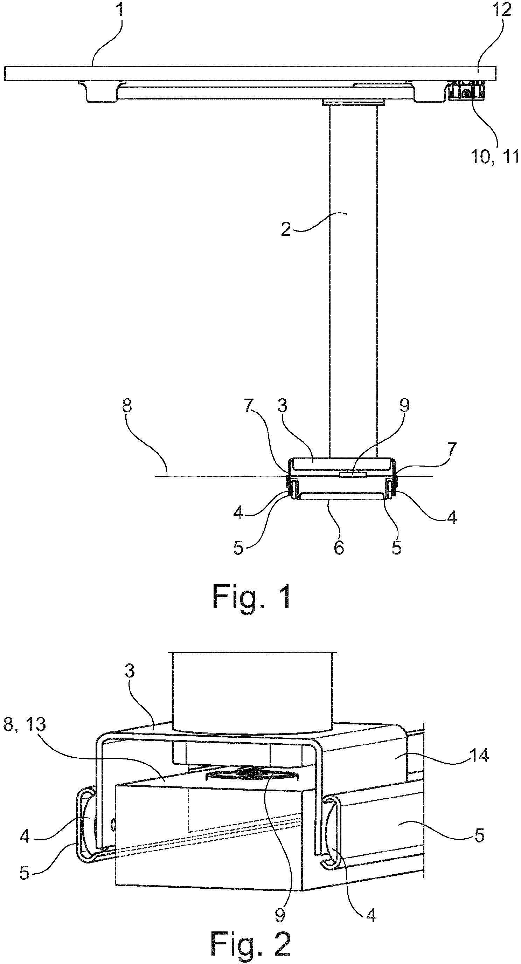

Die Fig. 1 zeigt in Queransicht einen verschiebbaren Tisch 1 mit dem Tischbein 2. Am unteren Ende des Tischbein 2 befindet sich ein Führungselement 3 mit zueinander beabstandeten Rollen 4, die in Schienen 5 geführt sind. Die Schienen 5 sind durch ein Verbindungblech 6 verbunden, das beispielsweise auf einem unteren Boden eines Doppelbodens aufliegen kann. Die Rollen 4 des Führungselements 3 sind dabei über Durchführungen 7 durch Schlitze in einem Fußboden 8 hindurchgeführt.

Ein Bremsfuß 9 ist durch eine Feder vorgespannt und wird gegen den Fußboden 8 gedrückt. Über einen Handgriff 10 als Betätigungsvorrichtung 11 kann beispielsweise über einen Seilzug der Bremsfuß 9 angehoben werden und zugleich mit der Hand eine Tischkante 12 erfasst werden, um den Tisch 1 zu verschieben.

Die Fig. 2 zeigt in Perspektivansicht den Fußbereich mit dem Führungselement 3 eines Tisches in einer zweiten Ausführungsform. Gleiche Bauelemente sind mit denselben Bezugszeichen bezeichnet. Im Gegensatz zur vorherigen Ausführungsform sind hier die Rollen 4 nach außen gewandt in die Schienen 5 eingesetzt. Der Bremsfuß 9 drückt auf den Fußboden 8, der beispielsweise aus Einlegeelementen 13 zwischen Durchführungen 14 durch den Fußboden 8 besteht. Die Rollen 4 sind gegenüber den Durchführungen 14 seitlich versetzt und durch die Oberkante der Schienen 5 abgedeckt. Dadurch wird die Gefahr des Eintrags von Schmutz in die Schienen verringert.

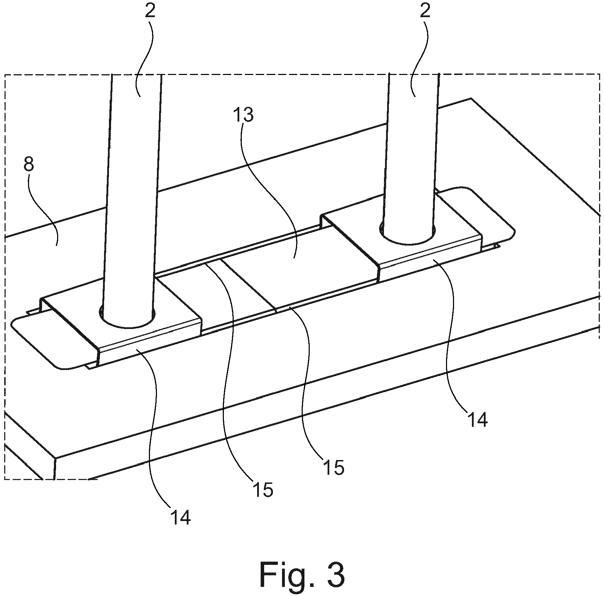

Die Fig. 3 zeigt in perspektivische Ansicht den Fußboden 8 mit zwei Positionen des Tischfußes. Der Fußboden 8 ist für die Durchführungen 14 nur jeweils mit einem Schlitz 15 geöffnet, der zusätzlich durch Abstreifbürsten geschützt sein kann.

Dargestellt sind die jeweiligen Endpositionen des Tischbeins 2 über den Verschiebeweg. Zwischen den Schlitzen 15, in denen die Durchführungen 14 sich bewegen befinden sich die Einlegeelemente 13.

## Patentansprüche

1. Freizeitfahrzeug mit einem Wohnbereich, in dem ein verschiebbarer Tisch (1) angeordnet ist, der in einem in dem Boden (8) eingelassenen Schienensystem zwischen mindestens zwei Positionen über eine Strecke verschiebbar ist, **dadurch gekennzeichnet,**
**dass** ein Führungselement (3) des Tisches in dem Schienensystem über Rollen (4) geführt ist.

2. Freizeitfahrzeug nach Anspruch 1,
**dadurch gekennzeichnet,**
**dass** der Tisch in einer Position durch ein Bremselement, das durch Reibung eine Haftkraft zwischen dem beweglichen Führungselement und einem Boden (8) des Freizeitfahrzeugs und oder dem Schienensystem erzeugt, in einer Position gehalten werden kann.

3. Freizeitfahrzeug nach Anspruch 2,
**dadurch gekennzeichnet,**
**dass** das Bremselement ein Bremsfuß (9) ist, der im Tischbein (2) angeordnet gegen die Bodenfläche (8) gedrückt wird.

4. Freizeitfahrzeug nach Anspruch 3,
**dadurch gekennzeichnet,**
**dass** der Bremsfuß (9) eine gummierte Fläche aufweist.

5. Freizeitfahrzeug nach Anspruch 3 oder 4,
**dadurch gekennzeichnet,**
**dass** der Bremsfuß (9) durch eine Betätigungsvorrichtung (11), insbesondere einen Seilzug oder eine Betätigungsstange über einen Hebelantrieb, angehoben werden kann und ansonsten durch eine Kraft vorgespannt ist, insbesondere die Kraft einer Feder.

6. Freizeitfahrzeug nach Anspruch 5,
**dadurch gekennzeichnet,**
**dass** ein Handgriff (10) für die Betätigungsvorrichtung (11) an einer Tischkante (12) an der Unterseite angeordnet ist und in betätigter Stellung, insbesondere gegen eine Tischplatte gedrückt, ein Verschieben des Tisches (1) über den Handgriff (10) ermöglicht.

7. Freizeitfahrzeug nach einem der vorhergehenden Ansprüche,
**dadurch gekennzeichnet,**
**dass** die Schienen (5) senkrecht betrachtet gegenüber einer Durchführung (14) des Führungselements (3) des Tisches (1) durch den Boden seitlich versetzt sind.

8. Freizeitfahrzeug nach einem der vorhergehenden Ansprüche,
**dadurch gekennzeichnet,**
**dass** das Führungselement (3) in zwei seitlich zueinander beanstandeten Schienen (5) geführt ist, insbesondere auch zwei zueinander beanstandete Durchführungen (14) durch den Boden aufweist.

9. Freizeitfahrzeug nach einem der vorhergehenden Ansprüche,
**dadurch gekennzeichnet,**
**dass** das Führungselement (3) durch Schlitze durch den Boden zu den Schienen (5) geführt ist, die insbesondere durch Abstreifbürsten verschlossen sein können.
